# EUROPEAN PATENT SPECIFICATION

(11) **EP 0 599 461 B1**
(45) Date of publication and mention of the grant of the patent: **23.10.1996**
(21) Application number: 93307694.5
(22) Date of filing: 28.09.1993
(51) Int. Cl.: C08F 299/00

(54) **Curable formulations**
Härtbare Zusammensetzungen
Compositions durcissables

(30) Priority: 06.10.1992 GB 9220987
(43) Date of publication of application: 01.06.1994
(73) Proprietor: CIBA-GEIGY AG, 4002 Basel (CH)
(72) Inventor: Hatton, Kevin Brian, Cambridge (GB); Taylor, David Alan, Cambridge, CB4 3PH (GB); Chasseaud, Peter Thomas, Cambridge, CB4 3NX (GB)
(74) Representative: Sharman, Thomas

(56) References cited:
- FR-A- 2 379 834
- GB-A- 2 217 722
- US-A- 4 246 379

## Description

The present invention relates to the preparation of curable formulations which, after cure, give materials with elastic properties and very large elongation before break.

Accordingly the present invention provides a process for the preparation of a liquid radically curable composition which comprises reacting a diisocyanate with a polyol, polythiol or polyamine having a molecular weight of at least 2000 in which the molar ratio of isocyanate groups to hydroxy, thiol or amine groups is between 1:1 and 2:1, in the presence of a monofunctional acrylate which is non-reactive with respect to isocyanates, as solvent, thereby forming a polyurethane, and then reacting the polyurethane with an acrylic compound by adding an acrylic compound with suitable reactivity towards isocyanates to produce a polyurethane having acrylic end groups, and then adding a catalyst for radical curing, which is a photoinitiator or a free radical polymerisation initiator.

The resulting formulation may be used to produce a cured product merely by adding a catalyst for radical curing and then curing the formulation. The monofunctional acrylate which acts as a solvent during the preparation of the polyurethane also reacts during the curing step.

The polyol, polythiol or polyamine, may have a molecular weight of from 2000 to 10,000, but preferably from 2000 to 6000. Suitable polyols include polytetrahydrofurans, bis-(3-aminopropyl) polytetrahydrofurans, polycaprolactone diols, polyalkylene glycols such as polypropylene glycols and products such as those sold under the Trade Names Jefamine® D4000, Permapol® PZ 985, and Dynacoll® 7250. Preferably a polyol is used.

The diisocyanate and may be any of those commonly used to make polyurethanes such as isophorone diisocyanate, hexamethylene diisocyanate, dicyclohexylmethane 4,4'-diisocyanate, toluene diisocyanate, diphenylmethane 4,4'-diisocyanate, trimethyl hexamethylene diisocyanate, tetramethyl xylylene diisocyanate, phenyl diisocyanate, xylylene diisocyanate and naphthalene diisocyanate.

The molar ratio of isocyanate groups to hydroxy, thiol or amine groups may vary over a wide range and is between 1:1 and 2:1, preferably about 1.2:1. Thus the preferred polyurethane has isocyanate end groups.

The monofunctional acrylate is chosen so as to dissolve the polyol, polythiol or polyamine. It is preferably hydrophobic. Suitable acrylates include higher alkyl acrylates or methacrylates having 3 to 20 carbon atoms in the alkyl chain, or, preferably, cycloaliphatic acrylates or methacrylates. Examples of suitable acrylates include isobornyl methacrylate, isobornyl acrylate, ethylhexyl acrylate, cyclohexyl methacrylate, octadecyl methacrylate, dicyclopentadiene acrylate, lauryl methacrylate and 2,2,3,3-tetrafluoropropyl methacrylate.

The amount of acrylate solvent used may be from 10 to 70% based on the weight of the whole formulation, preferably from 20 to 40%.

The acrylic compound which reacts with the polyurethane is one which results in the polyurethane having acrylate, methacrylate or acrylamide end groups. The compound is one which reacts with isocyanate, hydroxy, thiol or amine groups. Preferably a hydroxy-containing acrylate, methacrylate or acrylamide is used to react with isocyanate end groups on the polyurethane. Examples of suitable compounds include hydroxyethyl methacrylate, hydroxypropyl methacrylate, hydroxypropyl acrylate, ethyl α-(hydroxymethyl) acrylate, methacrylic anhydride, and p-hydroxyphenyl (N-methyl) acrylamide. The most preferred compound is hydroxyethyl methacrylate.

The amount of acrylic compound should be sufficient to react with all of the end groups on the polyurethane, a slight excess being preferred to ensure that there are no residual isocyanate groups. If an excess is used, this becomes part of the formulation and will also take part in the curing reaction.

In carrying out the process of the invention the polyol, polythiol or polyamine is dissolved in the acrylate solvent, preferably at elevated temperature e.g. up to 100°C. In order to prevent premature radical polymerisation it is preferred to add a radical polymerisation inhibitor in an amount of about 0.5 to 2% by weight based on the weight of acrylate. Examples of suitable inhibitors include 2,6-di-t-butyl-p-cresol, 4-methoxyphenol, hydroquinone and hydroquinone monomethyl ether.

The reaction may be carried out using known catalysts for urethane reactions such as dibutyl tin dilaurate, stannous octanoate, and tertiary amines.

After the polyurethane has been produced, the appropriate quantity of acrylic compound, together, if necessary, with an additional amount of radical polymerisation inhibitor is added and the reaction carried out at elevated temperature e.g. up to 100°C.

After production of the acrylic tipped polyurethane a polymerisation initiator is added to produce a curable formulation, which may be photocured by exposure to actinic radiation or cured by heat.

Where the formulation is to be photocured, it contains a photoinitiator for the photopolymerisation of acrylic groups. This can be any of the known initiators for the photopolymerisation of acrylic materials, used in a conventional amount, generally from 0.1 to 20%, preferably 1 to 10%, by weight of the polymerisable acrylic material. Thus the photopolymerisation initiator may be an aromatic carbonyl compound, for example a benzoin, a benzoin alkyl ether such as the isopropyl or n-butyl ether, an alpha-substituted acetophenone, for example a benzil ketal such as benzil dimethyl ketal, an alpha-haloacetophenone such as trichloromethyl p-tert. butylphenyl ketone, an alpha-aminoacetophenone such as dimethylaminomethyl phenyl ketone and morpholinomethyl phenyl ketone, a dialkyloxy-acetophenone such as diethoxyacetophenone, or an alpha-hydroxyacetophenone such as l-hydroxycyclohexylphenyl ketone or a benzophenone such as benzophenone itself and bis(4-dimethylamino)benzophenone; a metallocene, for example a titanium metallocene such as bis (pi-methylcyclopentadienyl)bis-(sigma-pentafluorophenyl) titanium (IV); a Group IVA organometallic compound, for example a stannane such as trimethyl benzyl stannane, tributyl benzyl stannane or dibutyl dibenzyl stannane, together with a photoreducible dye, typically methylene blue or rose bengal; a quinone, such as anthraquinone or camphorquinone, together with an amine having hydrogen attached to an aliphatic alpha carbon atom, preferably a tertiary amine such as bis(4-dimethylamino)benzophenone and triethanolamine; a thioxanthone, for example an alkyl- or halogen-substituted thioxanthone such as 2-isopropylthioxanthone or 2-chlorothioxanthone; an acyl phosphine oxide; or a mixture of two or more thereof.

Preferably, the photopolymerisation initiator is an alpha-substituted acetophenone, a thioxanthone, a metallocene or a mixture of two or more thereof. In particularly preferred embodiments, the initiator is 1-hydroxycyclohexylphenyl ketone, as the resulting products are non-yellowing.

Suitable sources of actinic radiation include carbon arcs, mercury vapour arcs, fluorescent lamps with phosphors emitting ultraviolet light, argon and xenon glow lamps, tungsten lamps and photographic flood lamps.

When the formulation is to be cured by heating, it preferably contains a free radical polymerisation initiator. This can be any of the known free radical-generating initiators conventionally used in vinyl polymerisation and is preferably an organic peroxide or azo compound. The initiators can be used in conventional amounts, generally from 0.01 to 15%, preferably 0.05 to 10%, by weight of the polymerisable material. Suitable organic peroxides include dialkyl peroxides such as tert.butyl peroxide and 2,2-bis(tert.butylperoxy)propane, diacyl peroxides such as benzoyl peroxide and acetyl peroxide, peresters such as tert.butyl perbenzoate and tert. butyl per- 2-ethylhexanoate, perdicarbonates such as dicetyl peroxy dicarbonate and dicyclohexyl peroxy dicarbonate, ketone peroxides such as cyclohexanone peroxide and methylethylketone peroxide, and hydroperoxides such as cumene hydroperoxide and tert.butyl hydroperoxide. Suitable azo compounds include azo bis(isobutyronitrile) and azo bis(2,4-dimethylvaleronitrile). Accelerators of free radical polymerisation, for example tertiary amines, ketimines, transition metal salts such as cobalt naphthenate and vanadium monobutyl phosphite and sulphimides, may be used together with the initiators.

The temperature and time needed to heat are the compositions will depend on the actual components and may range from 80° to 200°C.

Other additives conventionally employed in curable formulations may also be included. Examples of such additives are pigments, dyes, thixotropic agents such as highly dispersed silicas, bentonite and silicates e.g. Aerosils®, UV stabilisers, autioxidants and fillers.

The formulations of the invention may be used as a flexible adhesive, sealant or coating or as a component in an acrylate adhesive formulation. They may be used for bonding, protecting or filling glass, metal, plastics, rubber, wood or other substrates. Because of their flexibility they are very good impact and energy absorbers.

US 4246379 describes radiation curable compositions comprising
A. at least one unsaturated urethane resin comprising the reaction product of
   (i) at least one organic isocyanate compound having at least two isocyanate groups:
   (ii) from about 30 to 100 mol percent of at least one polymeric polyol characterized by the presence of at least two hydroxyl groups;
   (iii) from about 70 to zero mol percent of at least one monomeric polyol characterized by the presence of at least two hydroxyl groups; and
   (iv) at least one unsaturated addition-polymerizable monomeric compound having a single isocyanate-reactive active hydrogen group;
      said isocyanate compound being present in an amount sufficient to provide an NCO:OH ratio of at least 2.1:1, with respect to such polymeric and monomeric polyol hydroxyl groups;
      said mol percents being based on total mols of such polymeric and monomeric polyol hydroxyl groups;
      the average hydroxyl functionality wtih respect to such monomeric and polymeric polyols is at least 2.1;
      and wherein the amount of said unsaturated addition polymerizable monomeric compound having a single isocyanate-reactive active hydrogen group is sufficient to provide at least one molar equivalent with respect to isocyanate reactivity;
B. a reactive diluent system comprising at least one unsaturated addition-polymerizable monomeric compound which is copolymerizable with said unsaturated urethane resin; and optionally,
C. an effective amount of at least one photoinitiator compound.

The invention is illustrated by the following Examples.

The process used in the Examples is as follows.

P₁ Grams of polymer P, are heated at T₁°C for H₁ hours under a water pump vacuum. The temperature is reduced to 80°C and the vacuum removed. Then a₁ g of acrylate A₁, (1% a₁)g of di-tert butyl para-cresol, d₁ ml of diisocyanate D₁ and 0.2 ml dibutyltin dilaurate are added and the mixture heated at T₃°C for H₂ hours. Then a₂ g of acrylate A₂ and (1% a₂)g of di-tert butyl para cresol are added and the reaction mixture heated at T₃°C for H₃ hours. Finally i₁ g of initiator I₁ and b₁ g of additive B₁ are, if required added to make the formulation of the invention. The actual compounds, amounts, temperatures and times are shown in Table 1. The abbreviations used in Table I are given below.

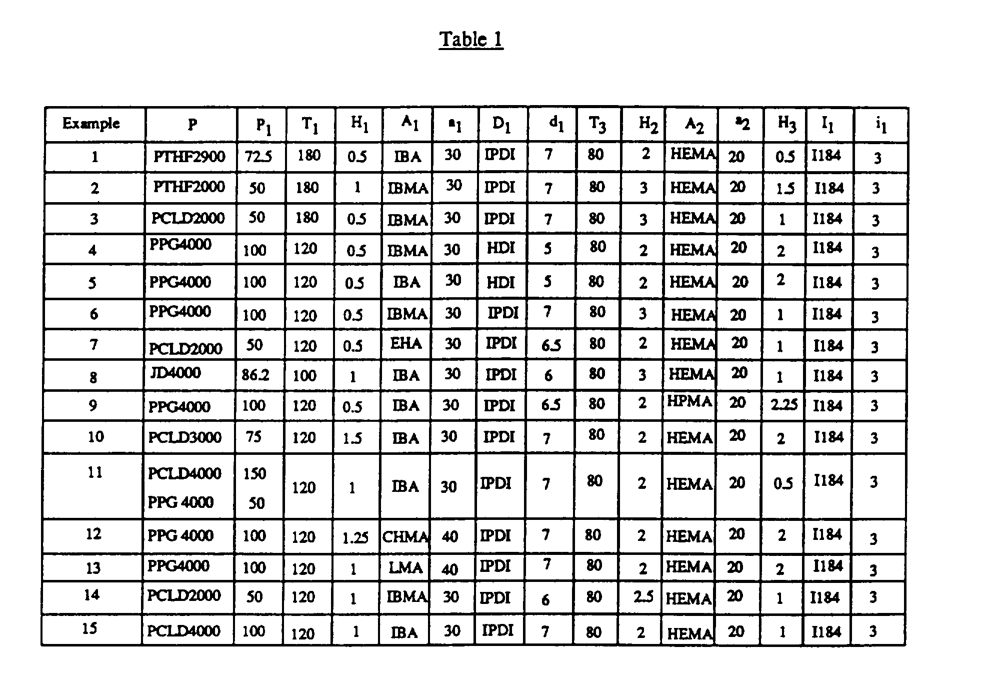

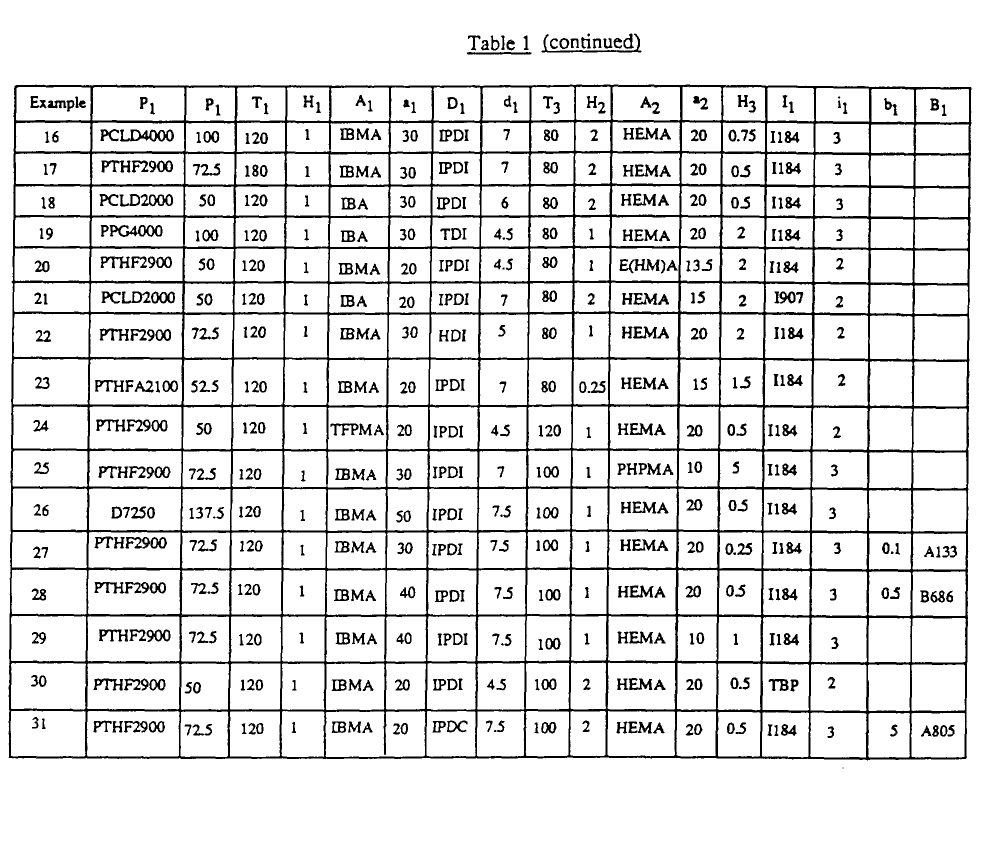

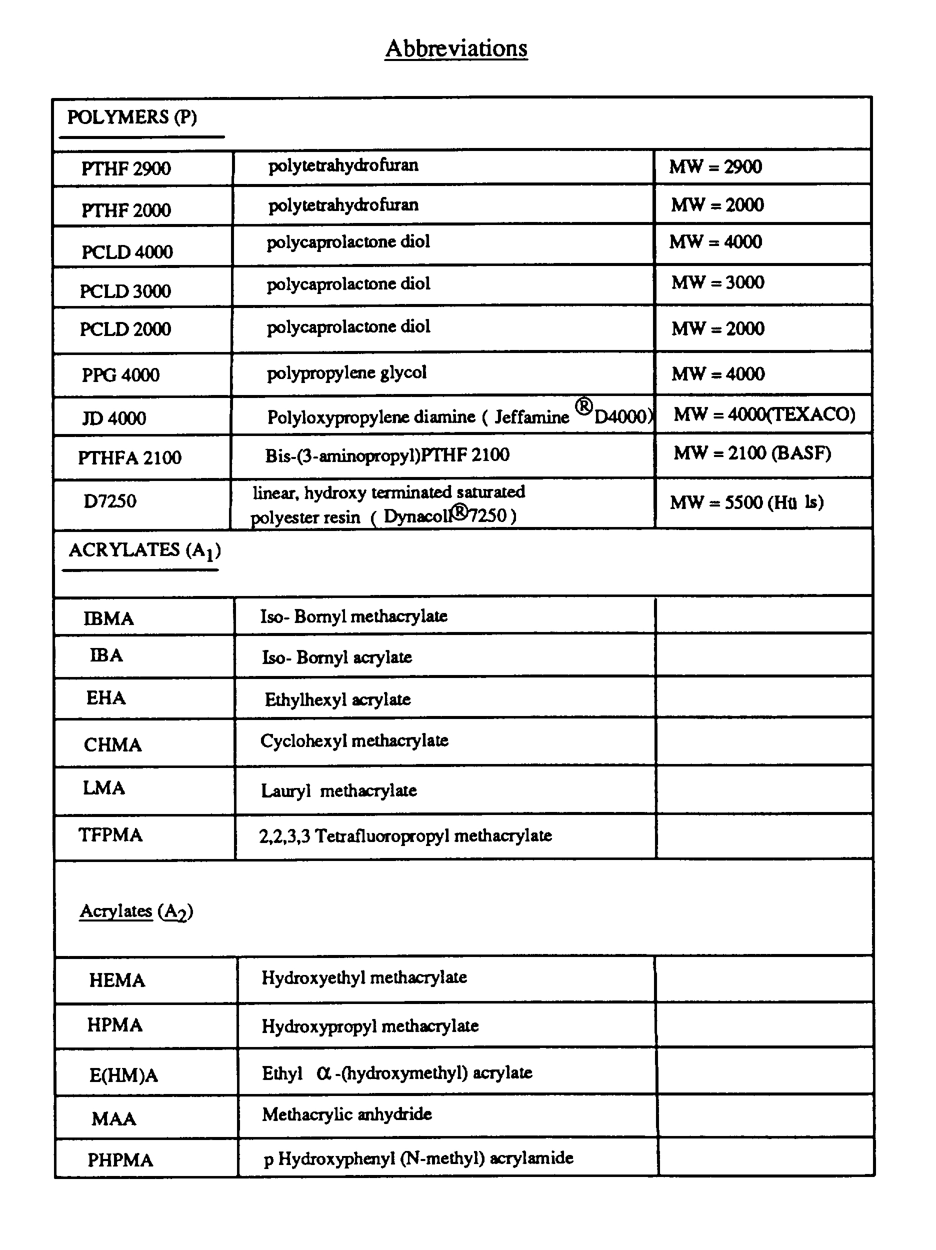

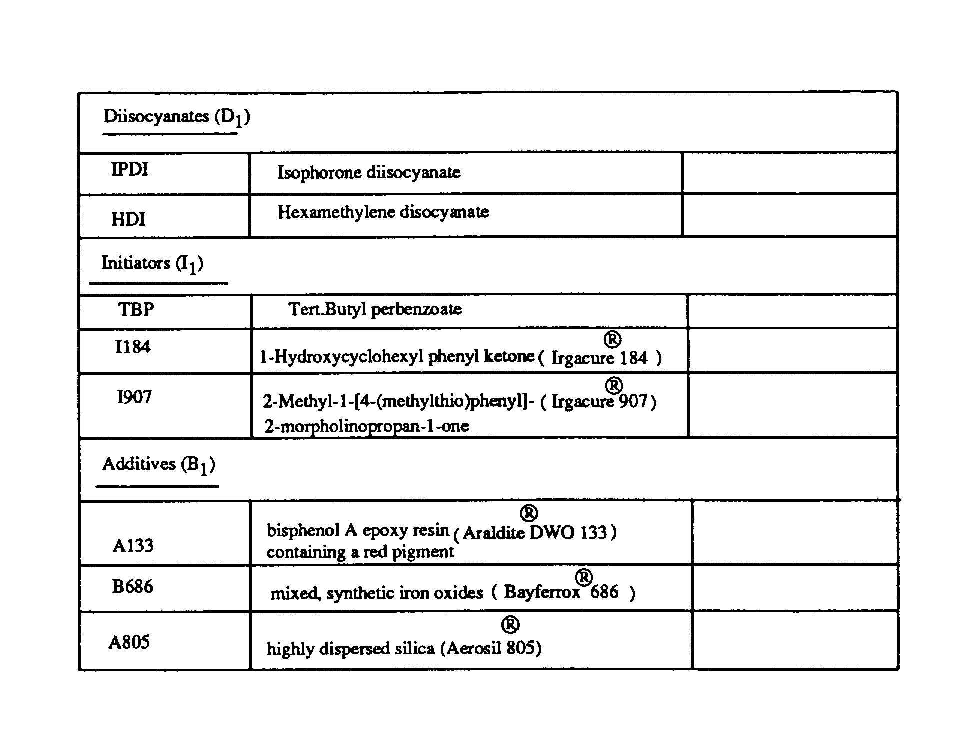

### Curing and Testing of Formulations

The formulation is placed between acrylic or Teflon® sheets using a 1mm rubber spacer and irradiated under a 5000 W Staub UV lamp using a M061 bulb at 750mm for 2 minutes (10 minutes for Examples 27 and 28).

The resultant cured film is then used to produce three test pieces using a cutter. The test pieces are dumbell shaped and are 115 mm long, 25 mm wide at the ends and with a central section 40 mm long and 6.5 mm wide. The test pieces are pulled to destruction on a MX50 Lloyd Tensiometer at a test speed of 100 mm min⁻¹ at 23°C. The average stress at break in N/mm² and elongation (%) at break is noted for each formulation using a gauge length of 40 mm. The average figures for the three samples are shown in Table 2.

Example 30 was cured by heating in a Heraeus UT5050 EK convection oven at 150°C for 1 hour.

**Table 2**

| Example | Elongation at Break | |
|---|---|---|
| | Stress (N/mm²) | Elongation (%) |
| 1 | 7.8 | 601 |
| 2 | 32.0 | 669 |
| 3 | 26.6 | 541 |
| 4 | 2.2 | 928 |
| 5 | 1.3 | 632 |
| 6 | 2.4 | 776 |
| 7 | 5.8 | 868 |
| 8 | 2.0 | 907 |
| 9 | 2.7 | 519 |
| 10 | 38.1 | 926 |
| 11 | 4.4 | 639 |
| 12 | 3.2 | 738 |
| 13 | 0.6 | 745 |
| 14 | 18.9 | 795 |
| 15 | 23.2 | 1005 |
| 16 | 41.7 | 983 |
| 17 | 22.7 | 827 |
| 18 | 29.1 | 990 |
| 19 | 5.1 | 1034 |
| 20 | 25.2 | 1115 |
| 21 | 10.2 | 485 |
| 22 | 40.7 | 1175 |
| 23 | 12.2 | 583 |
| 24 | 16.1 | 560 |
| 25 | 34.8 | 1045 |
| 26 | 20.7 | 1068 |
| 27 | 23.3 | 672 |
| 28 | 28.5 | 810 |
| 29 | 25.9 | 860 |
| 30 | 12.2 | 445 |
| 31 | 48.2 | 962 |

## Claims

1. A process for the preparation of a liquid radically curable composition which comprises reacting a diisocyanate with a polyol, polythiol or polyamine having a molecular weight of at least 2000 in which the molar ratio of isocyanate groups to hydroxy, thiol or amine groups is between 1:1 and 2:1, in the presence of a monofunctional acrylate which is non-reactive with respect to isocyanates, as solvent, thereby forming a polyurethane, and then reacting the polyurethane with an acrylic compound by adding an acrylic compound with suitable reactivity towards isocyanates to produce a polyurethane having acrylic end groups, and then adding a catalyst for radical curing, which is a photoinitiator or a free radical polymerisation initiator.

2. A process as claimed in claim 1 in which the diisocyanate is selected from the group consisting of isophorone diisocyanate, hexamethylene diisocyanate, dicyclohexylmethane 4,4'-diisocyanate toluene diisocyanate, diphenylmethane 4,4'-diisocyanate, trimethyl hexamethylene diisocyanate, tetramethyl xylylene diisocyanate, phenyl diisocyanate, xylylene diisocyanate and naphthalene diisocyanate.

3. A process as claimed in claim 1 in which the polyol, polythiol or polyamines has a molecular weight of from 2,000 to 10,000.

4. A process as claimed in claim 1 in which the diisocyanate is reacted with a compound selected from the group consisting of polytetrahydrofurans, bis-(3-aminopropyl) polytetrahydrofurans, polycaprolactone diols and polyalkylene glycols.

5. A process as claimed in claim 1 in which the monofunctional acrylate is a hydrophobic higher alkyl acrylate or methacrylate having 3 to 20 carbon atoms in the alkyl chain or a cycloaliphatic acrylate or methacrylate.

6. A process as claimed in claim 1 in which the amount of monofunctional acrylate is from 10 to 70% by weight based on the weight of the whole composition.

7. A process as claimed in claim 1 in which the acrylic compound which reacts with the polyurethane is one which results in the polyurethane having acrylate, methacrylate or acrylamide end groups.

8. A process as claimed in claim 7 in which the acrylic compound which reacts with the polyurethane is a hydroxy-containing acrylate, methacrylate or acrylamide.

## Patentansprüche

1. Verfahren zur Herstellung einer flüssigen radikalisch härtbaren Zusammensetzung, die Umsetzen eines Diisocyanats mit einem Polyol, Polythiol oder Polyamin mit einem Molekulargewicht von mindestens 2000 umfaßt, wobei das Molverhältnis von Isocyanatgruppen zu Hydroxy-, Thiol- oder Aminogruppen zwischen 1:1 und 2:1 ist, in Gegenwart eines monofunktionellen Acrylats, das bezüglich Isocyanaten nicht reaktiv ist, als Lösungsmittel, wodurch ein Polyurethan gebildet wird und anschließend Umsetzen des Polyurethans mit einer Acrylverbindung durch Zugabe einer Acrylverbindung mit geeigneter Reaktivität gegenüber Isocyanaten zur Herstellung eines Polyurethans mit Acrylendgruppen und anschließend Zugabe eines Katalysators zur radikalischen Härtung, der einen Photostarter oder einen über freie Radikale wirkenden Polymerisationsstarter darstellt.

2. Verfahren nach Anspruch 1, wobei das Diisocyanat ausgewählt ist aus der Gruppe, bestehend aus Isophorondiisocyanat, Hexamethylendiisocyanat, Dicyclohexylmethan-4,4'-diisocyanat, Toluoldiisocyanat, Diphenylmethan-4,4'-diisocyanat, Trimethylhexamethylendiisocyanat, Tetramethylxylylendiisocyanat, Phenyldiisocyanat, Xylylendiisocyanat und Naphthalindiisocyanat.

3. Verfahren nach Anspruch 1, wobei das Polyol, Polythiol oder die Polyamine ein Molekulargewicht von 2000 bis 10000 aufweisen.

4. Verfahren nach Anspruch 1, wobei das Diisocyanat mit einer Verbindung, ausgewählt aus der Gruppe, bestehend aus Polytetrahydrofuranen, Bis-(3-aminopropyl)polytetrahydrofuranen, Polycaprolactondiolen und Polyalkylenglycolen, umgesetzt wird.

5. Verfahren nach Anspruch 1, wobei das monofunktionelle Acrylat ein hydrophobes höheres Alkylacrylat oder -methacrylat mit 3 bis 20 Kohlenstoffatomen in der Alkylkette oder ein cycloaliphatisches Acrylat oder Methacrylat darstellt.

6. Verfahren nach Anspruch 1, wobei die Menge an monofunktionellem Acrylat 10 bis 70 Gewichtsprozent, bezogen auf das Gewicht der gesamten Zusammensetzung, beträgt.

7. Verfahren nach Anspruch 1, wobei die Acrylverbindung, die mit dem Polyurethan reagiert, derart ausgelegt ist, daß sie zu dem Polyurethan mit Acrylat-, Methacrylat- oder Acrylamidendgruppen führt.

8. Verfahren nach Anspruch 7, wobei die Acrylverbindung, die mit dem Polyurethan reagiert, ein Hydroxygruppen enthaltendes Acrylat, Methacrylat oder Acrylamid darstellt.

## Revendications

1. Un procédé pour la préparation d'une composition liquide durcissable par réaction radicalaire, qui consiste à faire réagir un diisocyanate avec un polyol, un polythiol ou une polyamine ayant un poids moléculaire d'au moins 2000, le rapport molaire des groupes isocyanate aux groupes hydroxyle, thiol ou amine étant compris entre 1:1 et 2:1, en présence d'un acrylate monofonctionnel qui n'est pas réactif envers les isocyanates, comme solvant, pour former ainsi un polyuréthanne, puis à faire réagir le polyuréthanne avec un composé acrylique en ajoutant un composé acrylique ayant une réactivité appropriée envers les isocyanates pour produire un polyuréthanne ayant des groupes acryliques terminaux, puis à ajouter un catalyseur de durcissement radicalaire qui est un photo-initiateur ou un initiateur de polymérisation radicalaire.

2. Un procédé tel que revendiqué dans la revendication 1, dans lequel le diisocyanate est choisi dans le groupe formé par le diisocyanate d'isophorone, le diisocyanate d'hexaméthylène, le 4,4'-diisocyanato-dicyclohexylméthane, le diisocyanate de tolylène, le 4,4'-diisocyanatodiphénylméthane, le diisocyanate de triméthylhexaméthylène, le diisocyanate de tétraméthylxylylène, le diisocyanate de phénylène, le diisocyanate de xylylène et le diisocyanate de naphtylène.

3. Un procédé tel que revendiqué dans la revendication 1, dans lequel le polyol, le polythiol ou la polyamine a un poids moléculaire de 2000 à 10 000.

4. Un procédé tel que revendiqué dans la revendication 1, dans lequel le diisocyanate est amené à réagir avec un composé choisi dans le groupe formé par les polytétrahydrofurannes, les bis(3-aminopropyl)-polytétrahydrofurannes, les polycaprolactone-diols et les polyalkylène-glycols.

5. Un procédé tel que revendiqué dans la revendication 1, dans lequel l'acrylate monofonctionnel est un acrylate ou méthacrylate d'alkyle supérieur hydrophobe dont la chaîne alkylique compte 3 à 20 atomes de carbone ou un acrylate ou méthacrylate cycloaliphatique.

6. Un procédé tel que revendiqué dans la revendication 1, dans lequel la quantité d'acrylate monofonctionnel est de 10 à 70 % en poids par rapport au poids de la composition totale.

7. Un procédé tel que revendiqué dans la revendication 1, dans lequel le composé acrylique qui réagit avec le polyuréthanne est un composé qui introduit des groupes acrylate, méthacrylate ou acrylamide terminaux sur le polyuréthanne.

8. Un procédé tel que revendiqué dans la revendication 7, dans lequel le composé acrylique qui réagit avec le polyuréthanne est un acrylate, méthacrylate ou acrylamide contenant un groupe hydroxyle.
